# EUROPEAN PATENT APPLICATION

(11) **EP 4 432 516 A1**
(43) Date of publication of application: **18.09.2024**
(21) Application number: 22892722.4
(22) Date of filing: 07.11.2022
(51) Int. Cl.: H02J 13/00, H02J 3/32, H02J 3/38, H02J 7/00

(54) **CHARGING/DISCHARGING SYSTEM AND METHOD FOR CONTROLLING CHARGING/DISCHARGING SYSTEM**

(30) Priority: 11.11.2021 JP 2021184059
(71) Applicant: GS Yuasa International Ltd., Kisshoin, Minami-ku, Kyoto-shi, Kyoto 601-8520 (JP)
(72) Inventor: KAKIUCHI, Shun, Kyoto-shi, Kyoto 601-8520 (JP); KAMATA, Akira, Kyoto-shi, Kyoto 601-8520 (JP); HAYASHI, Kentaro, Kyoto-shi, Kyoto 601-8520 (JP)
(74) Representative: Grünecker Patent- und Rechtsanwälte PartG mbB
(86) International application number: PCT/JP2022/041317
(87) International publication number: WO 2023/085223

(57) **Abstract**

A charge-discharge system 10 includes: an acquisition unit 161 that acquires charge-side power amount information 165 indicating a magnitude of a power amount including a charge power amount from the charge-discharge system 10 to a vehicle energy storage apparatus 51 in predetermined periods, and discharge-side power amount information 166 indicating a magnitude of a power amount including a discharge power amount from the vehicle energy storage apparatus 51 to the charge-discharge system 10; a generation unit 162 that generates display data 164m for causing a display device 41 to display a calendar screen on which the charge-side power amount information 165 and the discharge-side power amount information 166 are displayed for each of the predetermined periods in a calendar in which the predetermined periods are arranged; and a transmission unit 163 that transmits the display data 164m to the display device 41.

## Description

### TECHNICAL FIELD

The present invention relates to a charge-discharge system that performs charge-discharge with a vehicle energy storage apparatus that is an energy storage apparatus included in a vehicle, and a method of controlling the charge-discharge system.

### BACKGROUND ART

Patent Document 1 discloses a grid interconnection system (charge-discharge system) that is supplied with electric power from a power system, performs charge-discharge with a battery (vehicle energy storage apparatus) mounted on an electric vehicle, and supplies electric power to a power load.

### PRIOR ART DOCUMENT

### PATENT DOCUMENT

Patent Document 1: JP-A-2020-10442

### SUMMARY OF THE INVENTION

### PROBLEMS TO BE SOLVED BY THE INVENTION

In conventional charge-discharge systems as disclosed in Patent Document 1, since power is exchanged between the power system, the vehicle energy storage apparatus, and the power load, it may be difficult to grasp the exchange of the power. For this reason, it is desirable to enable easily grasping the exchange of power in the charge-discharge system.

An object of the present invention is to provide a charge-discharge system that enables easily grasping exchange of power, and a method for controlling the charge-discharge system.

### MEANS FOR SOLVING THE PROBLEMS

A charge-discharge system according to one aspect of the present invention performs charge-discharge with a vehicle energy storage apparatus that is an energy storage apparatus included in a vehicle in a predetermined supply area to which power from a power system is supplied, and supplies power to a power load in the supply area, the charge-discharge system including: an acquisition unit that acquires charge-side power amount information indicating a magnitude of a power amount including a charge power amount from the charge-discharge system to the vehicle energy storage apparatus in predetermined periods, and discharge-side power amount information indicating a magnitude of a power amount including a discharge power amount from the vehicle energy storage apparatus to the charge-discharge system; a generation unit that generates display data for causing a display device to display a calendar screen on which the charge-side power amount information and the discharge-side power amount information are displayed for each of the predetermined periods in a calendar in which the predetermined periods are arranged; and a transmission unit that transmits the display data to the display device.

The present invention can be realized not only as such a charge-discharge system but also as a method for controlling a charge-discharge system. The present invention can also be realized as a program for causing a computer to execute processing included in a method for controlling a charge-discharge system, and can also be realized as a recording medium such as a computer-readable CD-ROM in which the program is recorded. The program can be distributed via the recording medium and a transmission medium such as the Internet. The present invention can also be realized as an integrated circuit including a processing unit included in a charge-discharge system.

### ADVANTAGES OF THE INVENTION

According to the charge-discharge system and the like of the present invention, the exchange of power can be easily grasped.

### BRIEF DESCRIPTION OF THE DRAWINGS

Fig. 1 is a diagram illustrating an outline of a remote monitoring system including a charge-discharge system according to an embodiment.
Fig. 2 is a perspective view illustrating a configuration of the charge-discharge system according to the embodiment.
Fig. 3 is a block diagram illustrating a functional configuration of the charge-discharge system according to the embodiment.
Fig. 4 is a block diagram illustrating a functional configuration of a first communication unit according to the embodiment.
Fig. 5 is a diagram illustrating an example of display data displayed on a display device according to the embodiment.
Fig. 6 is a flowchart showing processing (a method for controlling the charge-discharge system) performed by the charge-discharge system according to the embodiment.
Fig. 7 is a flowchart illustrating processing in which a generation unit of a first communication unit according to the embodiment generates display data.
Fig. 8 is a flowchart illustrating processing in which a generation unit of the first communication unit according to the embodiment generates display data.
Fig. 9 is a flowchart illustrating selection information acquisition processing performed by a generation unit according to the embodiment.
Fig. 10 is a diagram illustrating an example of display data generated by the generation unit according to the embodiment performing selection information acquisition processing.
Fig. 11 is a diagram illustrating an example of display data generated by the generation unit according to the embodiment performing selection information acquisition processing.

### MODE FOR CARRYING OUT THE INVENTION

A charge-discharge system according to one aspect of the present invention is a charge-discharge system that performs charge-discharge with a vehicle energy storage apparatus that is an energy storage apparatus included in a vehicle in a predetermined supply area to which power from a power system is supplied, and supplies power to a power load in the supply area, the charge-discharge system including: an acquisition unit that acquires charge-side power amount information indicating a magnitude of a power amount including a charge power amount from the charge-discharge system to the vehicle energy storage apparatus in predetermined periods, and discharge-side power amount information indicating a magnitude of a power amount including a discharge power amount from the vehicle energy storage apparatus to the charge-discharge system; a generation unit that generates display data for causing a display device to display a calendar screen on which the charge-side power amount information and the discharge-side power amount information are displayed for each of the predetermined periods in a calendar in which the predetermined periods are arranged; and a transmission unit that transmits the display data to the display device.

According to this, the charge-discharge system generates display data for causing the display device to display a calendar screen on which the charge-side power amount information and the discharge-side power amount information are displayed for each predetermined period in a calendar in which predetermined periods are arranged, and transmits the display data to the display device. That is, the charge-discharge system transmits, to the display device, display data of a calendar screen on which information indicating the magnitude of power amount including the charge-discharge power amount between the charge-discharge system and the vehicle energy storage apparatus is displayed for each predetermined period of the calendar. If the information indicating the magnitude of power amount can be displayed for each predetermined period of the calendar, it is easy to intuitively grasp the state of the power amount. Therefore, since the exchange of power (power amount) with the vehicle energy storage apparatus or the like in the charge-discharge system can be displayed as a calendar on the screen of the display device, the exchange of power in the charge-discharge system can be easily grasped.

The generation unit may generate the display data for causing the display device to display the calendar screen on which a charge-side power amount diagram that is a diagram indicating the magnitude of the power amount indicated by the charge-side power amount information is displayed as the charge-side power amount information, and a discharge-side power amount diagram that is a diagram indicating the magnitude of the power amount indicated by the discharge-side power amount information is displayed as the discharge-side power amount information.

According to this, the charge-discharge system generates display data for causing the display device to display a calendar screen on which the charge-side power amount diagram and the discharge-side power amount diagram are displayed. That is, the charge-discharge system generates display data for causing the display device to display a calendar screen on which a diagram indicating the magnitude of the power amount including the charge-discharge power amount between the charge-discharge system and the vehicle energy storage apparatus is displayed. If a diagram indicating the magnitude of the power amount can be displayed for each predetermined period of the calendar, it is easy to intuitively grasp the state of the power amount. Therefore, since the exchange of power (power amount) with the vehicle energy storage apparatus or the like in the charge-discharge system can be displayed as a calendar on the screen of the display device in a diagram, the exchange of power in the charge-discharge system can be easily grasped.

The generation unit may generate the display data for causing the display device to display the calendar screen on which a numerical value indicating the magnitude of a power amount indicated by the charge-side power amount information is further displayed at a position corresponding to the charge-side power amount diagram as the charge-side power amount information, and a numerical value indicating the magnitude of a power amount indicated by the discharge-side power amount information is further displayed at a position corresponding to the discharge-side power amount diagram as the discharge-side power amount information.

According to this, the charge-discharge system generates display data for causing the display device to display a calendar screen on which numerical values indicating magnitude of power amounts of charge-side power amount information and discharge-side power amount information are further displayed at positions corresponding to the charge-side power amount diagram and the discharge-side power amount diagram. That is, the charge-discharge system generates display data of a calendar screen on which numerical values indicating the magnitudes of the power amounts are further displayed at positions corresponding to diagrams indicating the magnitudes of the power amounts including the charge-discharge power amounts with the vehicle energy storage apparatus. If the numerical value of the power amount is displayed at the position corresponding to the diagram of the power amount, it is easy to intuitively grasp the state of the power amount. Therefore, since the exchange of power (power amount) with the vehicle energy storage apparatus or the like in the charge-discharge system can be displayed as a calendar on the screen of the display device in diagram and numerical values, the exchange of power in the charge-discharge system can be easily grasped.

The generation unit may generate the display data for causing the display device to display the calendar screen displayed such that the charge-side power amount information and the discharge-side power amount information have the same positional relationship for each of the predetermined periods.

According to this, the charge-discharge system generates display data for causing a display device to display a calendar screen displayed such that information on a power amount including a charge power amount with the vehicle energy storage apparatus and information on a power amount including a discharge power amount have the same positional relationship for each of predetermined periods. If the information on the power amount including the charge power amount (charge-side power amount information) and the information on the power amount including the discharge power amount (discharge-side power amount information) are displayed in the same positional relationship for each of predetermined periods, it is easy to intuitively grasp the state of the power amount (which is excessive, balanced, etc.). Therefore, since the exchange of power (power amount) with the vehicle energy storage apparatus or the like in the charge-discharge system can be displayed as a calendar on the screen of the display device in the same positional relationship, the exchange of power in the charge-discharge system can be easily grasped.

At least one of a power generation apparatus and an energy storage apparatus may be connected to the charge-discharge system, the acquisition unit may acquire, as the charge-side power amount information, vehicle charge power amount information indicating a magnitude of a charge power amount of the vehicle energy storage apparatus and first power amount information indicating a magnitude of a power amount of at least one of a charge power amount of the energy storage apparatus and a power consumption amount of the power load, and acquire, as the discharge-side power amount information, vehicle discharge power amount information indicating a magnitude of a discharge power amount of the vehicle energy storage apparatus and second power amount information indicating a magnitude of a power amount of at least one of a generated power amount of the power generation apparatus and a discharge power amount of the energy storage apparatus, and the generation unit may generate the display data for causing the display device to display the calendar screen on which the vehicle charge power amount information and the first power amount information are displayed as the charge-side power amount information and the vehicle discharge power amount information and the second power amount information are displayed as the discharge-side power amount information.

Accordingly, the charge-discharge system generates display data of a calendar screen on which the vehicle charge power amount information and the first power amount information are displayed as the charge-side power amount information, and the vehicle discharge power amount information and the second power amount information are displayed as the discharge-side power amount information. That is, when at least one of the power generation apparatus and the energy storage apparatus is connected to the charge-discharge system, the information indicating the magnitude of the charge power amount of the vehicle energy storage apparatus and the information indicating the magnitude of at least one of the discharge power amount of the energy storage apparatus and the power consumption amount of the power load are set as the charge-side power amount information. The information indicating the magnitude of the discharge power amount of the vehicle energy storage apparatus and information indicating the magnitude of at least one of the power generation amount of the power generation apparatus and the discharge power amount of the energy storage apparatus are set to as the discharge-side power amount information. As a result, even when at least one of the power generation apparatus and the energy storage apparatus is connected to the charge-discharge system, exchange of power (power amount) between the charge-discharge system and at least one of the power generation apparatus and the energy storage apparatus can be displayed as a calendar on the screen of the display device. Therefore, exchange of power in the charge-discharge system can be easily grasped.

The generation unit may generate the display data for causing the display device to display the calendar screen on which the first power amount information is displayed closer to the vehicle charge power amount information than the vehicle discharge power amount information, and the second power amount information is displayed closer to the vehicle discharge power amount information than the vehicle charge power amount information.

According to this, the charge-discharge system generates display data for causing the display device to display a calendar screen on which the first power amount information is displayed near the vehicle charge power amount information and the second power amount information is displayed near the vehicle discharge power amount information. When the vehicle charge power amount information and the first power amount information as the charge-side power amount information are displayed close to each other, and the vehicle discharge power amount information and the second power amount information as the discharge-side power amount information are displayed close to each other, it is easy to intuitively grasp the state of the power amount. Therefore, since the exchange of power (power amount) in the charge-discharge system can be displayed as a calendar on the screen of the display device for each charge-side power amount information and for each discharge-side power amount information, the exchange of power in the charge-discharge system can be easily grasped.

The generation unit may generate the display data for causing the display device to display the calendar screen on which a diagram indicating the magnitude of the power amount indicated by the vehicle charge power amount information and a diagram indicating the magnitude of the power amount indicated by the first power amount information are displayed side by side as the charge-side power amount information, and a diagram indicating the magnitude of the power amount indicated by the vehicle discharge power amount information and a diagram indicating the magnitude of the power amount indicated by the second power amount information are displayed side by side as the discharge-side power amount information.

According to this, the charge-discharge system generates display data of a calendar screen on which diagrams indicating magnitudes of power amounts of the vehicle charge power amount information and the first power amount information are arranged, and diagrams indicating magnitudes of power amounts of the vehicle discharge power amount information and the second power amount information are arranged. That is, as the diagram indicating the magnitude of the power amount of the charge-side power amount information, a diagram indicating the magnitude of the charge power amount of the vehicle energy storage apparatus and a diagram indicating the magnitude of at least one of the charge power amount of the energy storage apparatus and the power consumption amount of the power load are arranged. As the diagram indicating the magnitude of the power amount of the discharge-side power amount information, a diagram indicating the magnitude of the discharge power amount of the vehicle energy storage apparatus and a diagram indicating the magnitude of at least one of the power generation amount of the power generation apparatus and the discharge power amount of the energy storage apparatus are arranged. As a result, it is easy to intuitively grasp and compare (which is excessive, balanced, etc.) the magnitude of the power amount of the charge-side power amount information and the magnitude of the power amount of the discharge-side power amount information. Therefore, since the exchange of the power (power amount) in the charge-discharge system can be displayed as a calendar on the screen of the display device such that the magnitudes of the power amounts of the charge-side power amount information and the discharge-side power amount information can be easily understood and displayed, the exchange of the power in the charge-discharge system can be easily grasped.

The generation unit may generate the display data for causing the display device to display the calendar screen on which charge-side power amount display information for displaying the charge-side power amount information and discharge-side power amount display information for displaying the discharge-side power amount information are further displayed, the acquisition unit may be configured to be able to acquire information indicating that at least one of the charge-side power amount display information and the discharge-side power amount display information displayed on the display device has been selected, and the generation unit may generate the display data for causing the display device to display the calendar screen on which the charge-side power amount information is not displayed, when the acquisition unit does not acquire information indicating that the charge-side power amount display information has been selected, and may generate the display data for causing the display device to display the calendar screen on which the discharge-side power amount information is not displayed, when the acquisition unit does not acquire information indicating that the discharge-side power amount display information has been selected.

Accordingly, the charge-discharge system generates, when not acquiring information indicating that the charge-side power amount display information or the discharge-side power amount display information has been selected, display data of a calendar screen on which the charge-side power amount information or the discharge-side power amount information is not displayed. As a result, information that has not been selected out of the charge-side power amount information and the discharge-side power amount information is not displayed on the calendar screen, so that information desired to be viewed can be selectively displayed, and the state of the power amount can be easily intuitively grasped. Therefore, since the exchange of power (power amount) in the charge-discharge system can be limited to the target to be viewed and displayed on the screen of the display device as a calendar, the exchange of power in the charge-discharge system can be easily grasped.

Hereinafter, a charge-discharge system, a method for controlling the charge-discharge system, and the like according to an embodiment of the present invention (including a modification example thereof) will be described with reference to the drawings. The embodiments described below show comprehensive or specific examples. Numerical values, components, arrangement positions and connection forms of the components, control processing, an order of the control processing, and the like described in the following embodiments are merely examples, and are not intended to limit the present invention. Each drawing is a schematic view and is not necessarily an exact illustration. In the drawings, the same or similar components are denoted by the same reference numerals.

### (Embodiment)

### [1 Description of charge-discharge system 10]

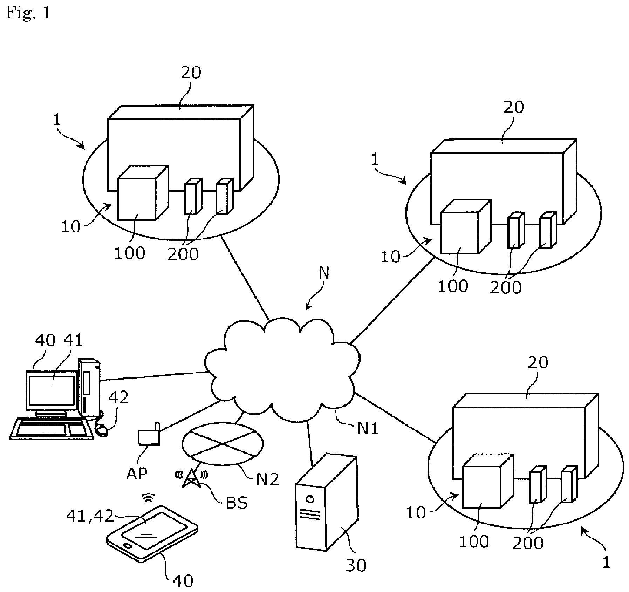

First, the charge-discharge system 10 will be generally described. Fig. 1 is a diagram illustrating an outline of a remote monitoring system including charge-discharge system 10 according to the present embodiment.

As illustrated in Fig. 1, plural (three in Fig. 1) supply areas 1, a server device 30 capable of collecting information on the supply area 1, a client device 40 capable of browsing the information on the supply area 1, and a network N which is a communication medium are arranged in the remote monitoring system. As a result, the information on the supply area 1 is displayed on a display device 41 of the client device 40 via the network N (and the server device 30), so that remote monitoring can be performed.

The supply area 1 is a predetermined site to which power from a power system is supplied, and is partitioned by a predetermined region such as a consumer unit, a facility unit, or a building unit. In each of the supply areas 1, a charge-discharge system 10 including a power conditioner 100 and a charge-discharge device 200 and a power load 20 are disposed, and power is supplied from the charge-discharge system 10 to the power load 20. The power load 20 is a power load consumed by power consumption equipment in a building (office or the like) disposed in each of the supply areas 1, power consumption equipment installed outdoors, or the like.

The server device 30 includes a web server function, and presents information obtained from the charge-discharge system 10 in the supply area 1 according to access from the client device 40. The server device 30 may be realized by a general-purpose computer system such as a personal computer executing a program, or may be realized by a dedicated computer system.

The network N includes a public communication network N1 which is so-called the Internet and a carrier network N2 which realizes wireless communication according to a predetermined mobile communication standard. The public communication network N1 includes a general optical line, and the network N includes a dedicated line connected to the server device 30. The carrier network N2 includes a base station BS, and the client device 40 can communicate with the server device 30 from the base station BS via the network N. An access point AP is connected to the public communication network N1, and the client device 40 can communicate with the server device 30 from the access point AP via the network N.

The client device 40 may be a desktop type or laptop type personal computer, or may be a so-called smartphone or tablet type communication terminal. The client device 40 includes a display device 41 such as a liquid crystal display, an input device 42 such as a keyboard, a mouse, or a touch panel, a control device, a storage unit (memory), a communication device, and the like. The storage unit stores a client program including a web browser and the like, the client program being read and executed by the control device. The user who has logged in through a login screen displayed on the web browser of the client device 40 can access information regarding a system in which the user is involved, the information being provided from the server device 30.

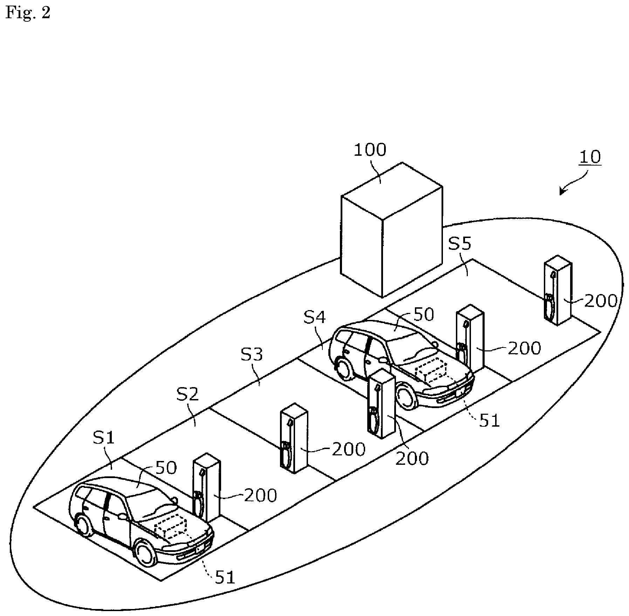

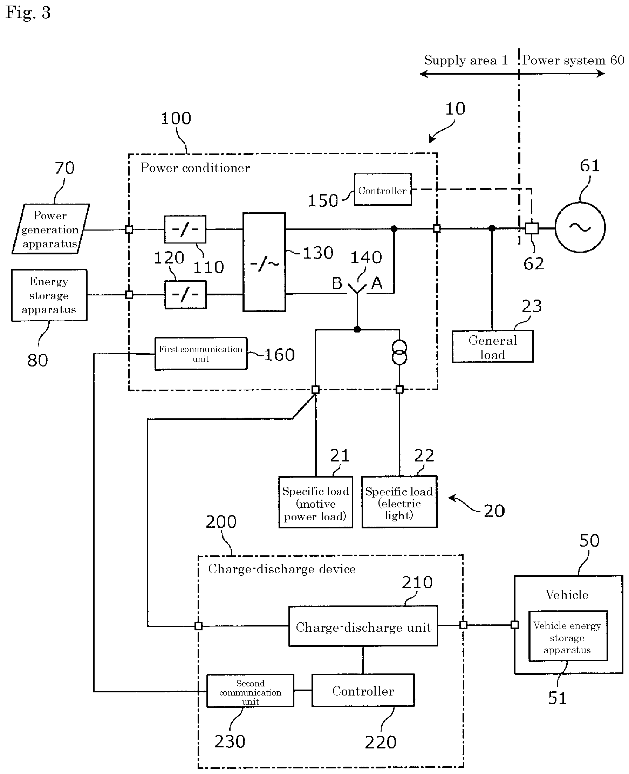

Next, the charge-discharge system 10 will be described in detail. Fig. 2 is a perspective view illustrating a configuration of the charge-discharge system 10 according to the present embodiment. Specifically, Fig. 2 is an image diagram illustrating a configuration of the power conditioner 100 and the charge-discharge device 200 included in the charge-discharge system 10, and a state in which a vehicle energy storage apparatus 51 of a vehicle 50 is connected to the charge-discharge device 200. Fig. 3 is a block diagram illustrating a functional configuration of the charge-discharge system 10 according to the present embodiment. Specifically, Fig. 3 illustrates a configuration in which the charge-discharge system 10 is connected to the vehicle energy storage apparatus 51 of the vehicle 50, the power system 60, the power generation apparatus 70, the energy storage apparatus 80, and the power load 20 in the supply area 1.

The charge-discharge system 10 is a system that performs charge-discharge with vehicle energy storage apparatus 51, which is an energy storage apparatus included in the vehicle 50, in the predetermined supply area 1 to which power from the power system 60 is supplied, and supplies power to the power load 20 in the supply area 1. As illustrated in Figs. 2 and 3, the charge-discharge system 10 includes the power conditioner 100 and the charge-discharge device 200. In Fig. 2, five charge-discharge devices 200 are illustrated, and in Fig. 3, only one charge-discharge device 200 is illustrated for convenience of description, but the number of charge-discharge devices 200 included in the charge-discharge system 10 is not particularly limited. The number of power conditioners 100 included in the charge-discharge system 10 is also not particularly limited.

That is, as illustrated in Fig. 2, the charge-discharge system 10 may be disposed in a centralized charge-discharge station in which parking spaces S1 to S5 are arranged adjacent to each other, or may be disposed in a distributed charge-discharge station (not illustrated) in which the parking spaces are distributed (such as on another floor of a building). In Fig. 2, the charge-discharge device 200 is disposed in each of the parking spaces (S1, S2, ...), but the present invention is not limited to this mode, and a single charge-discharge device 200 may be installed in a single parking space. Plural vehicles 50 (plural vehicle energy storage apparatuses 51) may be connected to one charge-discharge device 200. In other words, the plurality of vehicles 50 (the plurality of vehicle energy storage apparatuses 51) may be connected to the charge-discharge system 10, or only one vehicle 50 (one vehicle energy storage apparatus 51) may be connected to the charge-discharge system. The charge-discharge station in which the charge-discharge system 10 is disposed may be provided in a public place such as a public parking lot, or may be provided on the premises of a company or an individual.

As shown in Fig. 3, the power conditioner 100 is connected to the charge-discharge device 200, the power system 60, the power generation apparatus 70, the energy storage apparatus 80, and the power load 20, and exchanges power with these devices. That is, the power conditioner 100 receives power supply from the charge-discharge device 200, the power system 60, the power generation apparatus 70, and the energy storage apparatus 80, and supplies power to the charge-discharge device 200, the power system 60, the energy storage apparatus 80, and the power load 20.

The power system 60 is, for example, a commercial electric power system owned by an electric power company, and AC power generated by a system power supply 61 such as a thermal power plant flows therethrough. The power system 60 supplies the AC power to the power conditioner 100. The power generation apparatus 70 is a power generation apparatus installed in the supply area 1, and is a distributed power supply facility such as a solar power generation facility, a wind power generation facility, a diesel power generator, a small gas turbine power generator, a fuel cell, a micro hydraulic power generator, or binary power generation. The power generation apparatus 70 supplies the generated power to the power conditioner 100.

The energy storage apparatus 80 is a power supply apparatus capable of charging electricity from the outside and discharging electricity to the outside. The energy storage apparatus 80 charges power and discharges power via the power conditioner 100. Specifically, the energy storage apparatus 80 includes plural energy storage devices connected in series and/or in parallel. The energy storage device is a secondary battery (single battery) capable of charging and discharging electricity, and is, for example, a nonaqueous electrolyte secondary battery such as a lithium ion secondary battery. The energy storage device is not limited to the nonaqueous electrolyte secondary battery, and may be a secondary battery other than the nonaqueous electrolyte secondary battery, a capacitor, a primary battery, a battery using a solid electrolyte, or the like.

The power load 20 is a power load consumed in the supply area 1, and includes specific loads 21 and 22 used even in an emergency such as a power failure, and a general load 23 used in a normal time. The specific load 21 is a motive power load used in an elevator of a facility such as an office, commercial air conditioning, or the like, and the specific load 22 is an electric light load used for lighting, an outlet, or the like of a facility such as an office. The general load 23 is a power load other than the specific loads 21 and 22, and is a load for operating a machine in a home appliance or a factory.

The power conditioner 100 includes a first converter circuit 110, a second converter circuit 120, a bidirectional inverter circuit 130, a switching circuit 140, a controller 150, and a first communication unit 160.

The first converter circuit 110 is a power converter (DC/DC converter) that performs conversion between DC powers, is connected to the power generation apparatus 70, boosts an output voltage (DC) of the power generation apparatus 70, and outputs the boosted output voltage. The first converter circuit 110 may be a boost chopper. The second converter circuit 120 is a bidirectional power converter (bidirectional DC/DC converter) that performs conversion between DC powers, and is connected to the energy storage apparatus 80 to discharge and charge the energy storage apparatus 80. The second converter circuit 120 may be a bidirectional chopper. The energy storage apparatus 80 can store surplus power from the power generation apparatus 70 and power from the power system 60 via the second converter circuit 120. When the power generation amount of the power generation apparatus 70 is insufficient, the energy storage apparatus 80 can compensate for the shortage of the power generation amount through the second converter circuit 120 by discharging. The bidirectional inverter circuit 130 is a bidirectional conversion circuit that selectively performs reverse conversion (inverting) for converting DC power into AC power and forward conversion (converting) for converting AC power into DC power. The bidirectional inverter circuit 130 is connected to the first converter circuit 110, the second converter circuit 120, and the power system 60.

The switching circuit 140 is a circuit in which the three-phase specific load 21 and the single-phase specific load 22 are connected via a transformer, and a contact is switched in order to supply power to the specific loads 21 and 22 in an emergency such as a power failure of the power system 60. In a normal state, the switching circuit 140 is configured such that a contact A is connected to the power line and the power from the power system 60 can be supplied to the specific loads 21 and 22 and the like. In an emergency, the switching circuit 140 is configured such that the switching circuit is switched to a contact B and the power can be supplied from the power generation apparatus 70 and/or the energy storage apparatus 80 to the specific loads 21 and 22 via the bidirectional inverter circuit 130. As a result, during the power failure of the power system 60, backup power is supplied from at least one of the power generation apparatus 70, the energy storage apparatus 80, and the charge-discharge device 200 to the specific loads 21 and 22.

The controller 150 is a control device that controls various devices in the power conditioner 100. The power conditioner 100 further includes a current detector and a voltage detector (not illustrated). The current detector is, for example, a through hole sensor, and detects a current flowing through a power line in the power conditioner 100. The voltage detector detects a voltage of a power line in the power conditioner 100. The controller 150 has a function of calculating and acquiring power (active power) and an amount of power flowing in and out of the power line on the basis of the detected current and voltage. The controller 150 also has a function of calculating received power from a received power current and a system voltage detected by an external measuring instrument (external transducer) 62 provided at a receiving point of the power system 60, or acquiring the received power calculated by the external measuring instrument 62. As described above, the controller 150 is configured to be able to acquire the power and the amount of power of the current flowing between the charge-discharge system 10 and the power system 60, the power generation apparatus 70, the energy storage apparatus 80, and the power load 20. The controller 150 may be configured to be able to acquire information other than the above, such as a state of charge (SOC) of the energy storage apparatus 80 and the power and the amount of power of the current flowing between the power conditioner 100 and the charge-discharge device 200.

The first communication unit 160 is a communication board such as a network interface card (NIC), and can communicate with an external device. The first communication unit 160 is communicably connected to the controller 150 via a communication line (not illustrated), and acquires information from the controller 150. The first communication unit 160 is also communicably connected to a second communication unit 230 of the charge-discharge device 200 described later via a communication line or by wireless communication, and also acquires information from the second communication unit 230. The first communication unit 160 generates display data by using the acquired information, and transmits the display data to the client device 40 (display device 41). The first communication unit 160 will be described in detail later.

The power conditioner 100 may be a three-phase interconnection energy storage system capable of supplying power to a wide range of power loads. For example, space saving can be achieved by using, as the power conditioner 100, a so-called storage battery-equipped power conditioner integrally provided with the energy storage apparatus 80.

The charge-discharge device 200 is a charge-discharge stand that is connected to the vehicle energy storage apparatus 51 which is an energy storage apparatus included in the vehicle 50 and performs charge-discharge with the vehicle energy storage apparatus 51. The charge-discharge device 200 is also connected to the power load 20 via the power conditioner 100, charges the vehicle energy storage apparatus 51 in a normal time or the like, and discharges the vehicle energy storage apparatus 51 in an emergency or the like to supply power to the power load 20 or the like such as the specific loads 21 and 22.

The vehicle 50 is an automobile (moving body) such as an electric vehicle (EV) and a plug-in hybrid electric vehicle (PHEV), and the vehicle energy storage apparatus 51 is a battery mounted thereon. Similarly to the energy storage apparatus 80, the vehicle energy storage apparatus 51 includes plural energy storage devices (lithium ion secondary batteries and the like) connected in series and/or in parallel.

The charge-discharge device 200 includes a charge-discharge unit 210, a controller 220, and a second communication unit 230.

The charge-discharge unit 210 is a bidirectional conversion circuit that selectively performs forward conversion (conversion) for converting AC power into DC power and reverse conversion (inversion) for converting DC power into AC power. The charge-discharge unit 210 converts AC power from the power conditioner 100 into DC power, and supplies the DC power to the vehicle energy storage apparatus 51 to charge the vehicle energy storage apparatus 51. The charge-discharge unit 210 converts DC power discharged from the vehicle energy storage apparatus 51 into AC power, and supplies the AC power to the power load 20 and the like via the power conditioner 100.

The controller 220 controls the charge-discharge unit 210 by giving a command to the charge-discharge unit 210. The controller 220 has a function of calculating (estimating) and acquiring the power and the amount of power at the time of charging and discharging the vehicle energy storage apparatus 51 on the basis of the output of the charge-discharge unit 210. The controller 220 may have a function of acquiring and monitoring the SOC of the vehicle energy storage apparatus 51. The controller 220 may include a storage unit (memory), a display panel, an operation unit, and the like.

The second communication unit 230 is a communication board such as a network interface card (NIC) that can communicate with the first communication unit 160 of the power conditioner 100 through a communication line or by wireless communication. The second communication unit 230 acquires various types of information from the controller 220 and transmits the information to the first communication unit 160. Specifically, the second communication unit 230 acquires power, an amount of power, and the like charged and discharged between the vehicle energy storage apparatus 51 and the charge-discharge unit 210 (charge-discharge system 10) from the controller 220, and transmits the power, the amount of power, and the like to the first communication unit 160. As described above, in the present embodiment, the first communication unit 160 functions as a master unit, and the second communication unit 230 functions as a slave unit.

When plural charge-discharge devices 200 are provided in the charge-discharge system 10 as shown in Fig. 2, plural second communication units 230 included in plural charge-discharge devices 200 are configured to be able to communicate with the first communication unit 160, and information is transmitted from the plurality of second communication units 230 to the first communication unit 160. The second communication unit 230 may be configured to be able to communicate with the other second communication unit 230 included in the other charge-discharge device 200 in a wired or wireless manner, and may be configured to acquire information from the other second communication unit 230 and then transmit the information to the first communication unit 160.

### [2 Description of first communication unit 160]

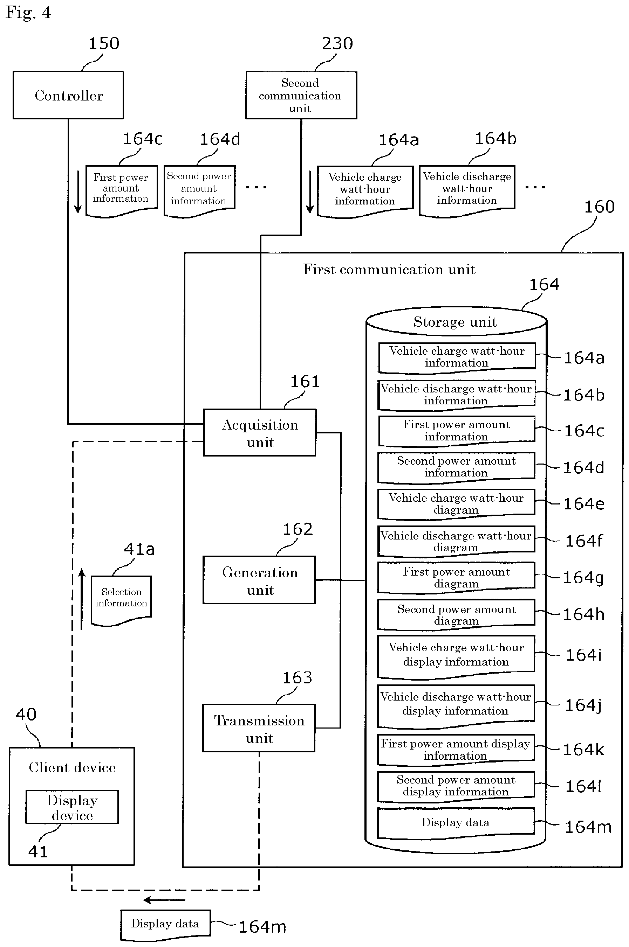

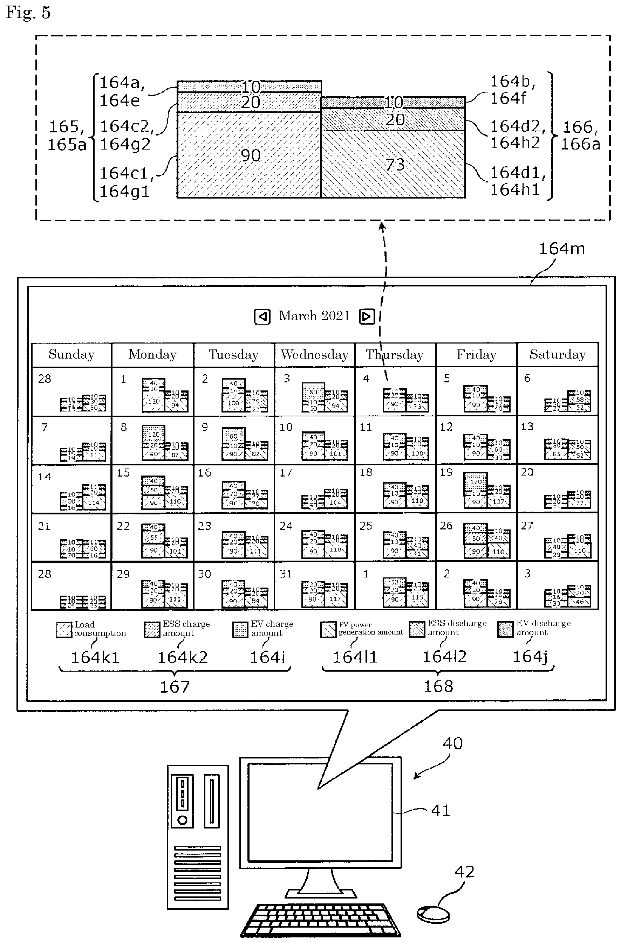

Next, the first communication unit 160 included in the power conditioner 100 of the charge-discharge system 10 will be described in detail. Fig. 4 is a block diagram illustrating a functional configuration of the first communication unit 160 according to the present embodiment. Fig. 4 illustrates a configuration in which the first communication unit 160 acquires information from the controller 150 and the second communication unit 230 and transmits the information to the client device 40 (display device 41). Fig. 5 is a diagram illustrating an example of display data 164m displayed on the display device 41 according to the present embodiment. In Fig. 5, a monitor of a personal computer is illustrated as an example of the display device 41, but a touch panel of a smartphone or a tablet type communication terminal may be used.

As illustrated in Fig. 4, the first communication unit 160 includes an acquisition unit 161, a generation unit 162, a transmission unit 163, and a storage unit 164.

The acquisition unit 161 acquires various types of information including charge-side power amount information 165 (see Fig. 5) and discharge-side power amount information 166 (see Fig. 5) in predetermined periods. The predetermined period is a predetermined period such as one hour, half a day, one day, one week, or one month. The plurality of predetermined periods are, for example, one day including 24 pieces of one hour, a half-month including 30 pieces of half days, one month including 30 pieces of one days, one month including four pieces of one weeks, and one year including 12 pieces of one months. In the present embodiment, the plurality of predetermined periods are one month including a plurality of one days, and the acquisition unit 161 acquires various types of information such as the charge-side power amount information 165 and the discharge-side power amount information 166 in each day in one month (see Fig. 5).

The charge-side power amount information 165 is information indicating the magnitude of the power amount including the charge power amount from the charge-discharge system 10 to the vehicle energy storage apparatus 51 (the power amount charged from the charge-discharge system 10 to the vehicle energy storage apparatus 51). The charge-side power amount information 165 is information indicating the magnitude of the power amount output from the charge-discharge system 10. As shown in Fig. 5, the charge-side power amount information 165 includes vehicle charge power amount information 164a indicating the magnitude of the charge power amount of the vehicle energy storage apparatus 51, and first power amount information 164c indicating the magnitude of the power amount of at least one of the charge power amount of the energy storage apparatus 80 and the power consumption amount of the power load 20. That is, the acquisition unit 161 acquires the vehicle charge power amount information 164a and the first power amount information 164c as the charge-side power amount information 165. In the present embodiment, the first power amount information 164c includes both first power amount information 164c1 indicating the magnitude of the power consumption amount of the power load 20 and first power amount information 164c2 indicating the magnitude of the charge power amount of the energy storage apparatus 80. In the present embodiment, the charge-side power amount information 165 is history information indicating the magnitude of the past power amount output from the charge-discharge system 10, but may be estimation information indicating the magnitude of the future power amount to be output from the charge-discharge system 10.

The discharge-side power amount information 166 is information indicating a magnitude of a power amount including a discharge power amount from the vehicle energy storage apparatus 51 to the charge-discharge system 10 (a power amount discharged from the vehicle energy storage apparatus 51 to the charge-discharge system 10). The discharge-side power amount information 166 is information indicating the magnitude of the power amount input to the charge-discharge system 10. As shown in Fig. 5, the discharge-side power amount information 166 includes vehicle discharge power amount information 164b indicating the magnitude of the discharge power amount of the vehicle energy storage apparatus 51, and second power amount information 164d indicating the magnitude of the power amount of at least one of the power generation amount of the power generation apparatus 70 and the discharge power amount of the energy storage apparatus 80. That is, the acquisition unit 161 acquires the vehicle discharge power amount information 164b and the second power amount information 164d as the discharge-side power amount information 166. In the present embodiment, the second power amount information 164d includes both second power amount information 164d1 indicating the magnitude of the power generation amount of the power generation apparatus 70 and second power amount information 164d2 indicating the magnitude of the discharge power amount of the energy storage apparatus 80. In the present embodiment, the discharge-side power amount information 166 is history information indicating the magnitude of the past power amount input to the charge-discharge system 10, but may be estimation information indicating the magnitude of the future power amount to be input to the charge-discharge system 10.

The acquisition unit 161 acquires the vehicle charge power amount information 164a, the vehicle discharge power amount information 164b, and the like from the second communication unit 230 of the charge-discharge device 200. The acquisition unit 161 acquires the first power amount information 164c (164c1 and 164c2), the second power amount information 164d (164d1 and 164d2), and the like from the controller 150 of the power conditioner 100. The acquisition unit 161 writes and stores, in the storage unit 164, various types of acquired information such as the vehicle charge power amount information 164a, the vehicle discharge power amount information 164b, the first power amount information 164c (164c1 and 164c2), and the second power amount information 164d (164d1 and 164d2).

The acquisition unit 161 is configured to be able to acquire the selection information 41a that is information indicating that at least one of charge-side power amount display information 167 (see Fig. 5) and discharge-side power amount display information 168 (see Fig. 5) displayed on display device 41 has been selected.

The charge-side power amount display information 167 is information for displaying the charge-side power amount information 165 on the display device 41, and includes vehicle charge power amount display information 164i and first power amount display information 164k as illustrated in Fig. 5. The vehicle charge power amount display information 164i is information for displaying the vehicle charge power amount information 164a (information indicating the magnitude of the charge power amount of the vehicle energy storage apparatus 51) on the display device 41. The first power amount display information 164k is information for displaying the first power amount information 164c (Information indicating the magnitude of power amount of at least one of the charge power amount of the energy storage apparatus 80 and the power consumption amount of the power load 20) on the display device 41. In the present embodiment, the first power amount display information 164k includes first power amount display information 164k1 for displaying the first power amount information 164c1 and first power amount display information 164k2 for displaying the first power amount information 164c2.

The vehicle charge power amount display information 164i and the first power amount display information 164k (164k1 and 164k2) are displayed on the display device 41 by characters, symbols, diagrams, or the like (Fig. 5 illustrates a diagram and characters) having discriminative power. The vehicle charge power amount display information 164i is displayed with a diagram having the same pattern (hatching) or the same color as that of the vehicle charge power amount information 164a and characters of "EV charge amount". The first power amount display information 164k1 is displayed with a diagram having the same pattern (hatching) or the same color as that of the first power amount information 164c1 and characters of "load consumption". The first power amount display information 164k2 is displayed with a diagram having the same pattern (hatching) or the same color as the first power amount information 164c2 and characters of "ESS charge amount".

The discharge-side power amount display information 168 is information for displaying the discharge-side power amount information 166 on the display device 41, and includes vehicle discharge power amount display information 164j and second power amount display information 1641 as shown in Fig. 5. The vehicle discharge power amount display information 164j is information for displaying the vehicle discharge power amount information 164b (information indicating the magnitude of the discharge power amount of the vehicle energy storage apparatus 51) on the display device 41. The second power amount display information 1641 is information for displaying the second power amount information 164d (information indicating the magnitude of power amount of at least one of the power generation amount of the power generation apparatus 70 and the discharge power amount of the energy storage apparatus 80) on the display device 41. In the present embodiment, the second power amount display information 1641 includes second power amount display information 16411 for displaying the second power amount information 164d1 and second power amount display information 16412 for displaying the second power amount information 164d2.

The vehicle discharge power amount display information 164j and the second power amount display information 1641 (16411 and 16412) are displayed on the display device 41 with characters, symbols, diagrams, or the like (Fig. 5 illustrates a diagram and characters) having discriminative power. The vehicle discharge power amount display information 164j is displayed with a diagram having the same pattern (hatching) or the same color as that of the vehicle discharge power amount information 164b and characters of "EV discharge amount". The second power amount display information 16411 is displayed with a diagram having the same pattern (hatching) or the same color as that of the second power amount information 164d1 and characters of "PV power generation amount". The second power amount display information 16412 is displayed with a diagram having the same pattern (hatching) or the same color as that of the second power amount information 164d2 and characters of "ESS discharge amount".

The selection information 41a is information indicating that at least one of the vehicle charge power amount display information 164i, the first power amount display information 164k (164k1 and 164k2), the vehicle discharge power amount display information 164j, and the second power amount display information 1641 (16411 and 16412) displayed on the display device 41 has been selected. In a case where the user selects (clicks or the like) at least one of these pieces of information displayed on the display device 41 of the client device 40, selection information 41a indicating which information has been selected is transmitted from the client device 40 (display device 41) to the acquisition unit 161. The acquisition unit 161 acquires the selection information 41a transmitted from the client device 40 (display device 41).

The generation unit 162 generates display data 164m for causing the display device 41 of the client device 40 to display a screen including various types of information as illustrated in Fig. 5. Specifically, the generation unit 162 generates the display data 164m for causing the display device 41 to display a calendar screen on which the charge-side power amount information 165 and the discharge-side power amount information 166 are displayed for each of predetermined periods in a calendar in which predetermined periods are arranged. As described above, in the present embodiment, the predetermined period is one day, and the plurality of predetermined periods are one month including a plurality of one days. Therefore, the above calendar is displayed such that one month of any month (March in Fig. 5) is divided for each day and arranged for each week (Sunday to Saturday).

Specifically, the generation unit 162 generates the display data 164m for causing the display device 41 to display a calendar screen on which charge-side power amount diagram 165a is displayed as the charge-side power amount information 165 and discharge-side power amount diagram 166a is displayed as the discharge-side power amount information 166. The charge-side power amount diagram 165a is a diagram indicating the magnitude of the power amount (the value of the power amount) indicated by the charge-side power amount information 165. In Fig. 5, the charge-side power amount diagram 165a is illustrated by a rectangular bar graph in which the magnitude (numerical value) of the power amount of the charge-side power amount information 165 is set as the height. The discharge-side power amount diagram 166a is a diagram indicating the magnitude of the power amount (the value of the power amount) indicated by the discharge-side power amount information 166. In Fig. 5, the discharge-side power amount diagram 166a is indicated by a rectangular bar graph in which the magnitude (numerical value) of the power amount of the discharge-side power amount information 166 is set to the height.

The generation unit 162 generates the display data 164m for causing the display device 41 to display a calendar screen on which the charge-side power amount information 165 and the discharge-side power amount information 166 are displayed so as to have the same positional relationship for each of predetermined periods. That is, in each of the predetermined periods, the charge-side power amount information 165 is disposed on the same side with respect to the discharge-side power amount information 166. In Fig. 5, on each day, the charge-side power amount information 165 and the discharge-side power amount information 166 are arranged side by side in the left-right direction such that the charge-side power amount information 165 is located on the left side and the discharge-side power amount information 166 is located on the right side. Further, in each of the predetermined periods (each day), the charge-side power amount information 165 and the discharge-side power amount information 166 have the same diagram (in Fig. 5, the same pattern may be used, but the same color may be used).

The generation unit 162 generates, as the charge-side power amount information 165, the display data 164m for causing the display device 41 to display a calendar screen on which the vehicle charge power amount information 164a and the first power amount information 164c (164c1 and 164c2) are displayed. Specifically, the generation unit 162 generates the display data 164m for causing the display device 41 to display a calendar screen on which the first power amount information 164c (164c1 and 164c2) is displayed closer to the vehicle charge power amount information 164a than the vehicle discharge power amount information 164b. More specifically, the generation unit 162 generates, as the charge-side power amount information 165, the display data 164m for causing the display device 41 to display a calendar screen on which a vehicle charge power amount diagram 164e and a first power amount diagram 164g (164g1 and 164g2) are displayed side by side. The vehicle charge power amount diagram 164e is a diagram indicating the magnitude of the power amount (the value of the power amount) indicated by the vehicle charge power amount information 164a. The first power amount diagram 164g (164g1 and 164g2) is a diagram indicating the magnitude of the power amount (value of the power amount) indicated by the first power amount information 164c (164c1 and 164c2). In Fig. 5, the vehicle charge power amount diagram 164e and the first power amount diagram 164g (164g1 and 164g2) are illustrated by a rectangular bar graph with the magnitude (numerical value) of the power amount as the height, and are stacked vertically.

The generation unit 162 generates, as the discharge-side power amount information 166, the display data 164m for causing the display device 41 to display a calendar screen on which the vehicle discharge power amount information 164b and the second power amount information 164d (164d1 and 164d2) are displayed. Specifically, the generation unit 162 generates the display data 164m for causing the display device 41 to display a calendar screen on which the second power amount information 164d (164d1 and 164d2) is displayed closer to the vehicle discharge power amount information 164b than the vehicle charge power amount information 164a. More specifically, the generation unit 162 generates, as the discharge-side power amount information 166, the display data 164m for causing the display device 41 to display a calendar screen on which a vehicle discharge power amount diagram 164f and a second power amount diagram 164h (164h1 and 164h2) are displayed side by side. The vehicle discharge power amount diagram 164f is a diagram indicating the magnitude of the power amount (the value of the power amount) indicated by the vehicle discharge power amount information 164b. The second power amount diagram 164h (164h1 and 164h2) is a diagram indicating the magnitude of the power amount (the value of the power amount) indicated by the second power amount information 164d (164d1 and 164d2). In Fig. 5, the vehicle discharge power amount diagram 164f and the second power amount diagram 164h (164h1 and 164h2) are illustrated by rectangular bar graphs with the magnitude (numerical value) of the power amount as the height, and are stacked vertically.

The generation unit 162 generates, as the charge-side power amount information 165, the display data 164m for causing the display device 41 to display a calendar screen on which a numerical value indicating the magnitude of the power amount indicated by the charge-side power amount information 165 is further displayed at a position corresponding to the charge-side power amount diagram 165a. That is, numerical values (kWh or the like) indicating the magnitudes of the power amounts indicated by the vehicle charge power amount information 164a and the first power amount information 164c (164c1 and 164c2) are displayed at positions corresponding to the vehicle charge power amount diagram 164e and the first power amount diagram 164g (164g1 and 164g2). In Fig. 5, the values of the power amounts of the vehicle charge power amount information 164a and the first power amount information 164c (164c1 and 164c2) are displayed inside the vehicle charge power amount diagram 164e and the first power amount diagram 164g (164g1 and 164g2).

The generation unit 162 generates, as the discharge-side power amount information 166, the display data 164m for causing the display device 41 to display a calendar screen on which a numerical value indicating the magnitude of the power amount indicated by the discharge-side power amount information 166 is further displayed at a position corresponding to the discharge-side power amount diagram 166a. That is, numerical values (kWh or the like) indicating the magnitudes of the power amounts indicated by the vehicle discharge power amount information 164b and the second power amount information 164d (164d1 and 164d2) are displayed at positions corresponding to the vehicle discharge power amount diagram 164f and the second power amount diagram 164h (164h1 and 164h2). In Fig. 5, the values of the power amounts of the vehicle discharge power amount information 164b and the second power amount information 164d (164d1 and 164d2) are displayed inside the vehicle discharge power amount diagram 164f and the second power amount diagram 164h (164h1 and 164h2).

The generation unit 162 generates the display data 164m for causing the display device 41 to display a calendar screen on which the charge-side power amount display information 167 for displaying the charge-side power amount information 165 and the discharge-side power amount display information 168 for displaying the discharge-side power amount information 166 are further displayed. When the acquisition unit 161 does not acquire the selection information 41a indicating that the charge-side power amount display information 167 has been selected, the generation unit 162 generates the display data 164m for causing the display device 41 to display a calendar screen on which the charge-side power amount information 165 is not displayed. When the acquisition unit 161 does not acquire the selection information 41a indicating that the discharge-side power amount display information 168 has been selected, the generation unit 162 generates the display data 164m for causing the display device 41 to display a calendar screen on which the discharge-side power amount information 166 is not displayed.

The above processing in which the generation unit 162 generates the display data 164m will be described in detail later. Various types of information necessary for the generation unit 162 to generate the display data 164m are stored in the storage unit 164, and the generation unit 162 reads and acquires the information from the storage unit 164. These pieces of information may be stored in the storage unit 164 in advance, or the information acquired by the acquisition unit 161 may be written and stored in the storage unit 164. The generation unit 162 may acquire information from a processing unit (input from the user or the like) other than the storage unit 164. The generation unit 162 writes and stores the generated display data 164m in the storage unit 164.

The transmission unit 163 transmits the display data 164m to the display device 41. The transmission unit 163 reads and acquires the display data 164m generated by the generation unit 162 and stored in the storage unit 164 from the storage unit 164, and transmits the display data 164m to the client device 40 (display device 41). As a result, as illustrated in Fig. 5, the display data 164m is displayed on the display device 41 of the client device 40.

The storage unit 164 is a memory that stores data necessary for the generation unit 162 to generate the display data 164m, such as the data acquired by the acquisition unit 161, the display data 164m generated by the generation unit 162, and the like. The storage unit 164 stores vehicle charge power amount information 164a, vehicle discharge power amount information 164b, first power amount information 164c, second power amount information 164d, a vehicle charge power amount diagram 164e, a vehicle discharge power amount diagram 164f, a first power amount diagram 164g, a second power amount diagram 164h, vehicle charge power amount display information 164i, vehicle discharge power amount display information 164j, first power amount display information 164k, second power amount display information 1641, display data 164m, and the like. The storage unit 164 may store data other than the above data, such as data in the middle of generation of the display data 164m by the generation unit 162. In the storage unit 164, in a case where there is a change in these pieces of data, these pieces of data are updated each time, but these pieces of data may be accumulated.

### [3 Description of processing flow of charge-discharge system 10]

Next, processing performed by the charge-discharge system 10 (a method for controlling the charge-discharge system 10) will be described.

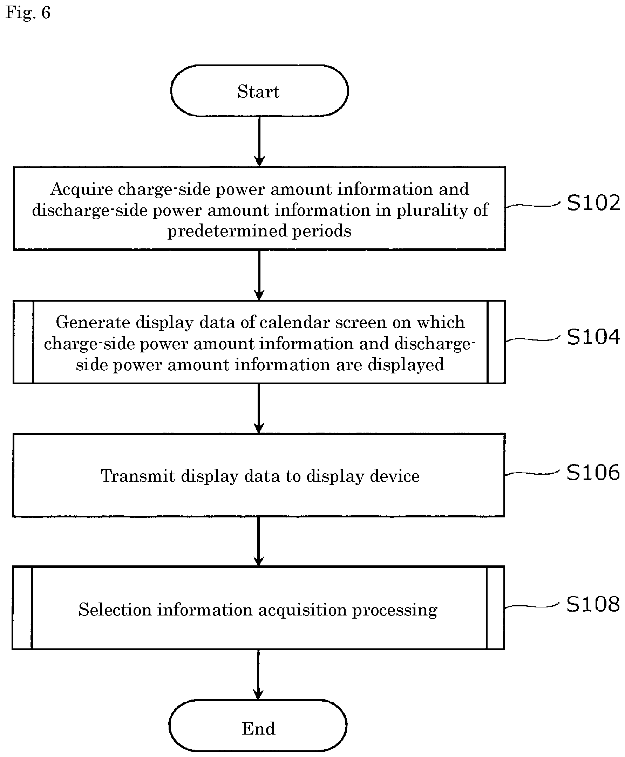

Fig. 6 is a flowchart showing processing (a method for controlling the charge-discharge system) performed by the charge-discharge system 10 according to the present embodiment. Fig. 6 illustrates processing performed by each processing unit of the first communication unit 160 included in the power conditioner 100 of the charge-discharge system 10.

As shown in Fig. 6, first, the acquisition unit 161 acquires various types of information such as the charge-side power amount information 165 and the discharge-side power amount information 166 in predetermined periods (S102). Details of each piece of information acquired by the acquisition unit 161 are as described above, and thus description thereof is omitted.

Then, the generation unit 162 generates the display data 164m for causing the display device 41 to display a calendar screen on which the charge-side power amount information 165 and the discharge-side power amount information 166 are displayed for each predetermined period in a calendar in which predetermined periods are arranged (S104). The processing in which the generation unit 162 generates the display data 164m will be described in detail later.

Then, the transmission unit 163 transmits the display data 164m generated by the generation unit 162 to the display device 41 of the client device 40 (S106).

Thereafter, in a case where the acquisition unit 161 acquires the selection information 41a, selection information acquisition processing by the generation unit 162 is performed (S108). The selection information acquisition processing performed by the generation unit 162 will be described in detail later.

As described above, the processing (method for controlling the charge-discharge system) performed by the charge-discharge system 10 (first communication unit 160) ends.

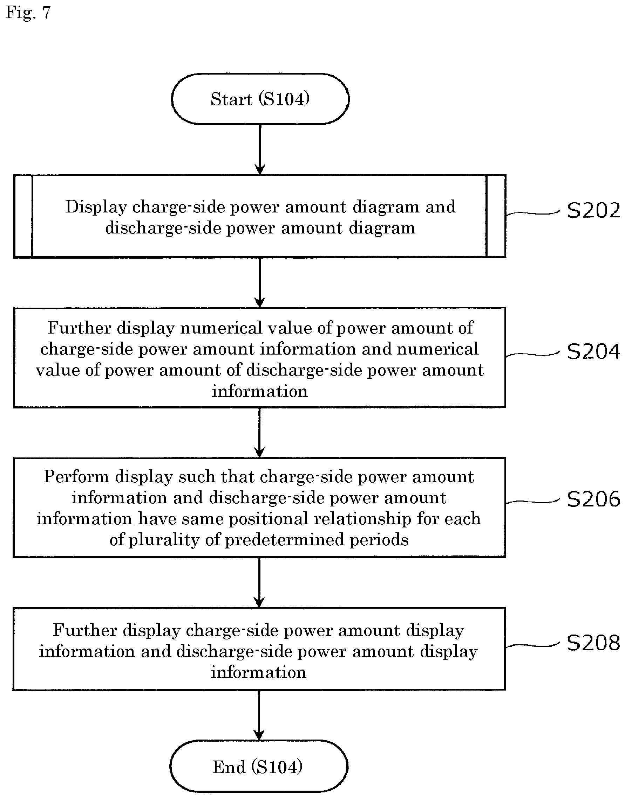

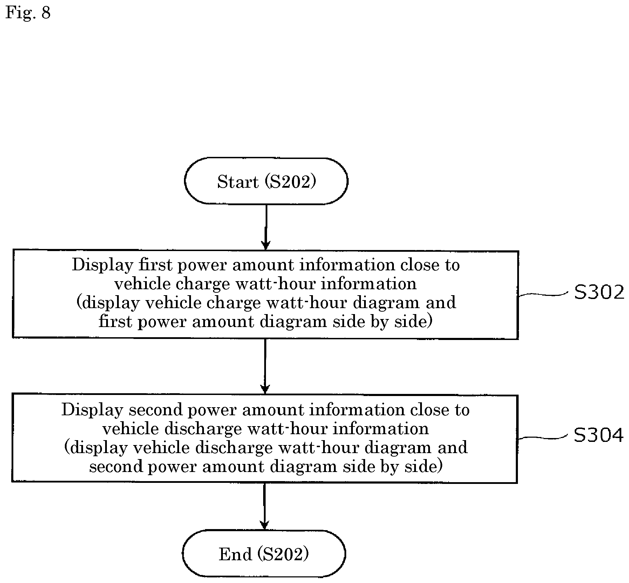

Next, the processing in which the generation unit 162 generates the display data 164m (S104 in Fig. 6) will be described in detail. Figs. 7 and 8 are flowcharts illustrating processing in which the generation unit 162 of the first communication unit 160 according to the present embodiment generates the display data 164m.

As illustrated in Fig. 5, the generation unit 162 generates the display data 164m for causing the display device 41 to display the following screen.

As shown in Fig. 7, first, the generation unit 162 displays the charge-side power amount diagram 165a as the charge-side power amount information 165, and displays the discharge-side power amount diagram 166a as the discharge-side power amount information 166 (S202 in Fig. 7).

Specifically, the generation unit 162 displays the vehicle charge power amount information 164a and the first power amount information 164c (164c1 and 164c2) as the charge-side power amount information 165. Then, the generation unit 162 displays the first power amount information 164c (164c1 and 164c2) closer to the vehicle charge power amount information 164a than the vehicle discharge power amount information 164b. Specifically, the generation unit 162 displays the vehicle charge power amount diagram 164e and the first power amount diagram 164g (164g1 and 164g2) side by side (in a stacked manner) as the charge-side power amount information 165 (S302 in Fig. 8).

The generation unit 162 displays the vehicle discharge power amount information 164b and the second power amount information 164d (164d1 and 164d2) as the discharge-side power amount information 166. Then, the generation unit 162 displays the second power amount information 164d (164d1 and 164d2) closer to the vehicle discharge power amount information 164b than the vehicle charge power amount information 164a. Specifically, the generation unit 162 displays the vehicle discharge power amount diagram 164f and the second power amount diagram 164h (164h1 and 164h2) side by side (in a stacked manner) as the discharge-side power amount information 166 (S304 in Fig. 8).

Next, the generation unit 162 further displays a numerical value indicating the magnitude of the power amount indicated by the charge-side power amount information 165 and a numerical value indicating the magnitude of the power amount indicated by the discharge-side power amount information 166 (step S204 in Fig. 7). Specifically, the generation unit 162 further displays a numerical value of the power amount of the charge-side power amount information 165 at a position corresponding to the charge-side power amount diagram 165a, and further displays a numerical value of the power amount of the discharge-side power amount information 166 at a position corresponding to the discharge-side power amount diagram 166a. More specifically, the generation unit 162 displays the values of the power amounts of the vehicle charge power amount information 164a and the first power amount information 164c (164c1 and 164c2) at positions (inside the diagrams) corresponding to the vehicle charge power amount diagram 164e and the first power amount diagram 164g (164g1 and 164g2). The generation unit 162 displays the values of the power amounts of the vehicle discharge power amount information 164b and the second power amount information 164d (164d1 and 164d2) at positions (inside the diagrams) corresponding to the vehicle discharge power amount diagram 164f and the second power amount diagram 164h (164h1 and 164h2).

The generation unit 162 performs the display such that the charge-side power amount information 165 and the discharge-side power amount information 166 have the same positional relationship for each predetermined period (S206 in Fig. 7). That is, the generation unit 162 performs arrangement such that, in each predetermined period, the charge-side power amount information 165 is located on the same side (left side) with respect to the discharge-side power amount information 166.

Then, the generation unit 162 further displays the charge-side power amount display information 167 for displaying the charge-side power amount information 165 and the discharge-side power amount display information 168 for displaying the discharge-side power amount information 166 (S208 in Fig. 7). Specifically, the generation unit 162 performs display such that the vehicle charge power amount display information 164i and the first power amount display information 164k (164k1 and 164k2) included in the charge-side power amount display information 167 are arranged at positions (in Fig. 5, the lower side of the calendar display) adjacent to the calendar display. The generation unit 162 also performs display such that the vehicle discharge power amount display information 164j and the second power amount display information 1641 (16411 and 16412) included in the discharge-side power amount display information 168 are arranged at positions (in Fig. 5, the lower side of the calendar display) adjacent to the calendar display.

As described above, the processing in which the generation unit 162 generates the display data 164m (S104 in Fig. 6) ends.

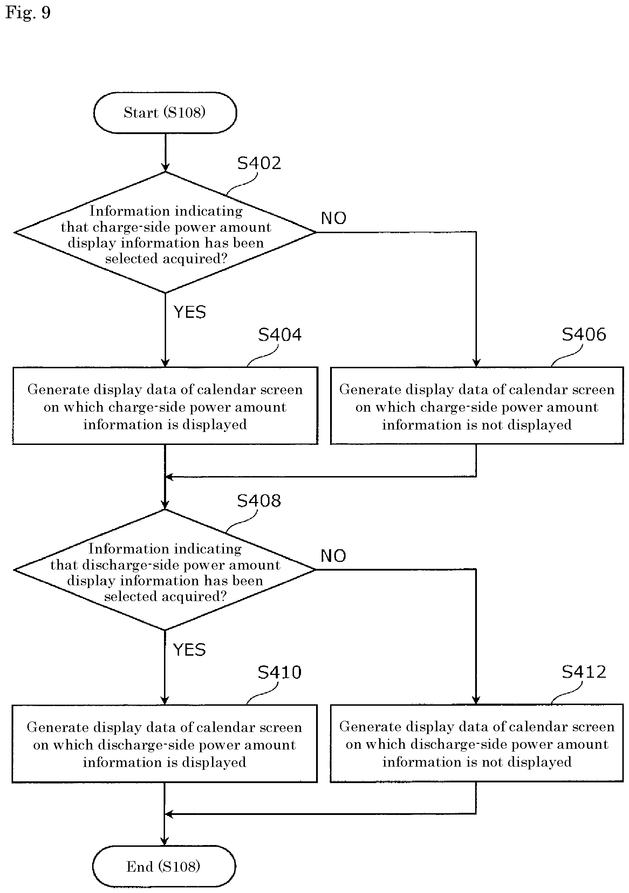

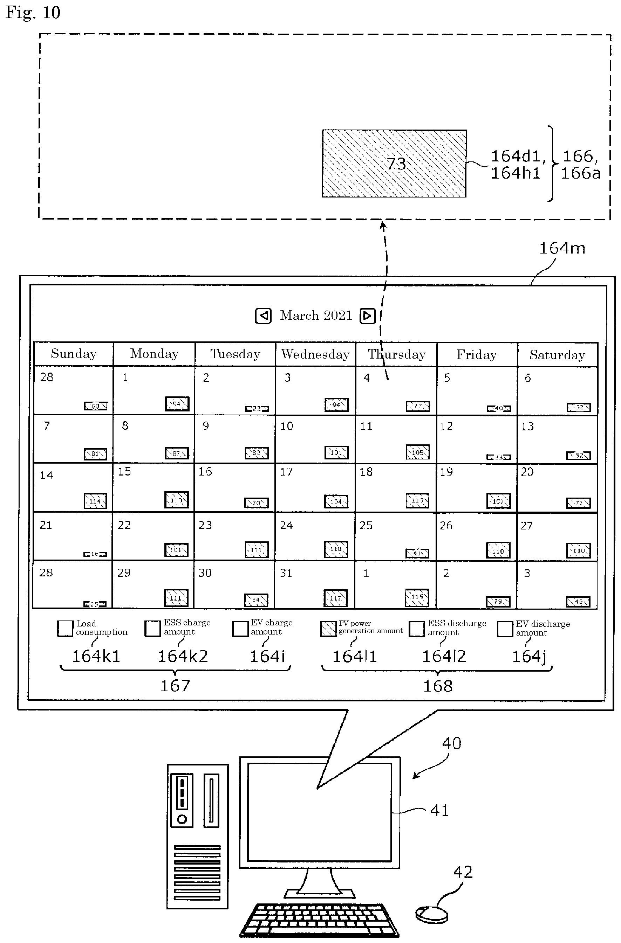

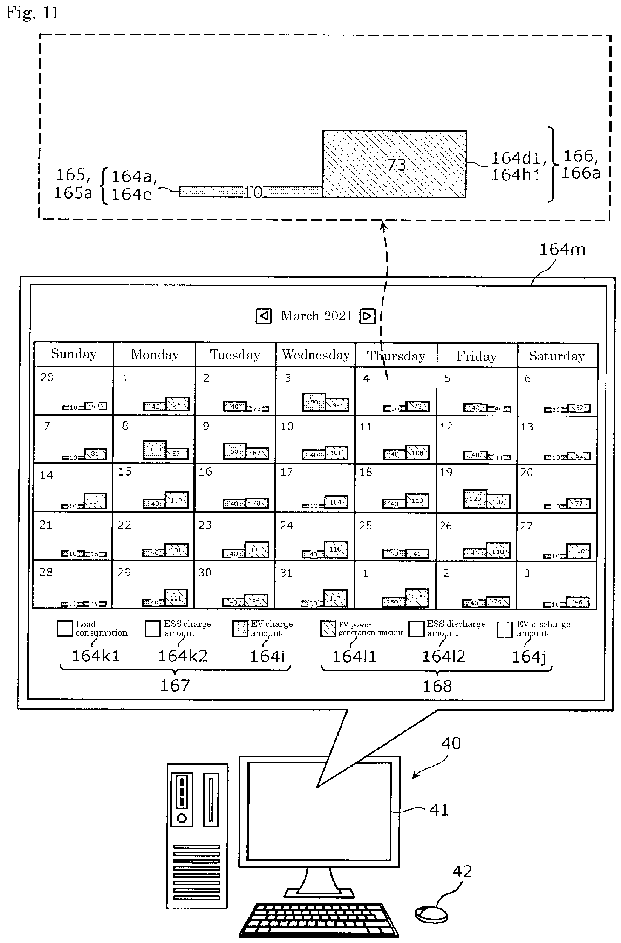

Next, the selection information acquisition processing (S108 in Fig. 6) performed by the generation unit 162 will be described in detail. Fig. 9 is a flowchart illustrating selection information acquisition processing performed by the generation unit 162 according to the present embodiment. Figs. 10 and 11 are diagrams illustrating an example of the display data 164m generated by the generation unit 162 according to the present embodiment performing the selection information acquisition processing.

As shown in Fig. 9, the generation unit 162 determines whether or not the acquisition unit 161 has acquired selection information 41a indicating that the charge-side power amount display information 167(the vehicle charge power amount display information 164i, the first power amount display information 164k1 or 164k2) has been selected (S402). When the user selects the charge-side power amount display information 167 displayed on the display device 41 of the client device 40 by clicking or touching it via the input device 42, the selection information 41a indicating that the charge-side power amount display information 167 has been selected is transmitted to the acquisition unit 161. When the acquisition unit 161 acquires the selection information 41a, the generation unit 162 determines that the acquisition unit 161 has acquired the selection information 41a indicating that the charge-side power amount display information 167 has been selected.

The generation unit 162 generates, when determining that the acquisition unit 161 has acquired the selection information 41a indicating that the charge-side power amount display information 167 has been selected (YES in S402), the display data 164m for causing the display device 41 to display the calendar screen on which the charge-side power amount information 165 is displayed (S404). The generation unit 162 generates, when determining that the acquisition unit 161 has not acquired the selection information 41a indicating that the charge-side power amount display information 167 has been selected (NO in S402), the display data 164m for causing the display device 41 to display a calendar screen on which the charge-side power amount information 165 is not displayed (S406).

The generation unit 162 determines whether or not the acquisition unit 161 has acquired the selection information 41a indicating that the discharge-side power amount display information 168(the vehicle discharge power amount display information 164j, the second power amount display information 16411 or 16412) has been selected (S408). When the user selects the discharge-side power amount display information 168 displayed on the display device 41 of the client device 40 by clicking or touching it via the input device 42, the selection information 41a indicating that the discharge-side power amount display information 168 has been selected is transmitted to the acquisition unit 161. When the acquisition unit 161 acquires the selection information 41a, the generation unit 162 determines that the acquisition unit 161 has acquired the selection information 41a indicating that the discharge-side power amount display information 168 has been selected.

The generation unit 162 generates, when determining that the acquisition unit 161 has acquired the selection information 41a indicating that the discharge-side power amount display information 168 has been selected (YES in S408), the display data 164m for causing the display device 41 to display a calendar screen on which the discharge-side power amount information 166 is displayed (S410). The generation unit 162 generates, when determining that the acquisition unit 161 has not acquired the selection information 41a indicating that the discharge-side power amount display information 168 has been selected (NO in S408), the display data 164m for causing the display device 41 to display a calendar screen on which the discharge-side power amount information 166 is not displayed (S412).

In Fig. 10, in the discharge-side power amount display information 168, the second power amount display information 16411 for displaying the second power amount information 164d1 indicating the magnitude of the power generation amount of the power generation apparatus 70 has been selected (a diagram having the same pattern or the same color as the second power amount diagram 164h1 is displayed). Therefore, in Fig. 10, the generation unit 162 determines that the acquisition unit 161 has acquired the selection information 41a indicating that the second power amount display information 16411 in the discharge-side power amount display information 168 has been selected. As a result, the generation unit 162 generates the display data 164m for causing the display device 41 to display the calendar screen on which the second power amount information 164d1 (the second power amount diagram 164h1 and the value of the power amount) in the discharge-side power amount information 166 is displayed.

In Fig. 11, in addition to the state of Fig. 10, the vehicle charge power amount display information 164i for displaying the vehicle charge power amount information 164a indicating the magnitude of the charge power amount of the vehicle energy storage apparatus 51 has been selected (a diagram having the same pattern or the same color as the vehicle charge power amount diagram 164e is displayed) in the charge-side power amount display information 167. Accordingly, in Fig. 11, the generation unit 162 determines that the acquisition unit 161 has acquired the selection information 41a indicating that the vehicle charge power amount display information 164i in the charge-side power amount display information 167 and the second power amount display information 16411 in the discharge-side power amount display information 168 have been selected. Thus, in addition to the state of Fig. 10, the generation unit 162 generates the display data 164m for causing the display device 41 to display a calendar screen on which the vehicle charge power amount information 164a (vehicle charge power amount diagram 164e and the value of the power amount) in the charge-side power amount information 165 is displayed.

As described above, the selection information acquisition processing (S108 in Fig. 6) performed by the generation unit 162 ends.

### [4 Description of Effects]

As described above, the charge-discharge system 10 according to the present embodiment generates display data 164m for causing the display device 41 to display a calendar screen on which the charge-side power amount information 165 and the discharge-side power amount information 166 for each predetermined period in a calendar in which predetermined periods are arranged, and transmits the display data 164m to the display device 41. That is, the charge-discharge system 10 transmits, to the display device 41, the display data 164m of the calendar screen on which information (such as a charge-discharge history) indicating the magnitude of a power amount including the charge-discharge power amount between the charge-discharge system 10 and the vehicle energy storage apparatus 51 is displayed for each predetermined period of the calendar. If the information indicating the magnitude of power amount can be displayed for each predetermined period of the calendar, it is easy to intuitively grasp the state of the power amount. Therefore, since the exchange of power (power amount) with the vehicle energy storage apparatus 51 or the like in the charge-discharge system 10 can be displayed as a calendar on the screen of the display device 41, the exchange of power in the charge-discharge system 10 can be easily grasped.

The charge-discharge system 10 generates the display data 164m for causing the display device 41 to display a calendar screen on which the charge-side power amount diagram 165a and the discharge-side power amount diagram 166a are displayed. That is, the charge-discharge system 10 generates the display data 164m for causing the display device 41 to display the calendar screen on which the diagram indicating the magnitude of the power amount including the charge-discharge power amount between the charge-discharge system 10 and the vehicle energy storage apparatus 51 is displayed. If a diagram indicating the magnitude of the power amount can be displayed for each predetermined period of the calendar, it is easy to intuitively grasp the state of the power amount. Therefore, since the exchange of power (power amount) with the vehicle energy storage apparatus 51 or the like in the charge-discharge system 10 can be displayed as a calendar on the screen of the display device 41 in a diagram, the exchange of power in the charge-discharge system 10 can be easily grasped.

The charge-discharge system 10 generates the display data 164m for causing the display device 41 to display a calendar screen on which numerical values indicating magnitudes of power amounts of the charge-side power amount information 165 and the discharge-side power amount information 166 are further displayed at positions corresponding to the charge-side power amount diagram 165a and the discharge-side power amount diagram 166a. That is, the charge-discharge system 10 generates the display data 164m of the calendar screen on which the numerical value indicating the magnitude of the power amount is further displayed at the position corresponding to the diagram indicating the magnitude of the power amount including the charge-discharge power amount with the vehicle energy storage apparatus 51. If the numerical value of the power amount is displayed at the position corresponding to the diagram of the power amount, it is easy to intuitively grasp the state of the power amount. Therefore, since the exchange of power (power amount) with the vehicle energy storage apparatus 51 or the like in the charge-discharge system 10 can be displayed as a calendar on the screen of the display device 41 in diagrams and numerical values, the exchange of power in the charge-discharge system 10 can be easily grasped.

The charge-discharge system 10 generates the display data 164m for causing the display device 41 to display a calendar screen on which information on the power amount including the charge power amount with the vehicle energy storage apparatus 51 and information on the power amount including the discharge power amount are displayed so as to have the same positional relationship for each predetermined period. When the information on the power amount including the charge power amount (charge-side power amount information 165) and the information on the power amount including the discharge power amount (discharge-side power amount information 166) are displayed in the same positional relationship for each predetermined period, it is easy to intuitively grasp the state of the power amount (which is excessive, balanced, etc.). Therefore, since the exchange of power (power amount) with the vehicle energy storage apparatus 51 or the like in the charge-discharge system 10 can be displayed as a calendar on the screen of the display device 41 in the same positional relationship, the exchange of power in the charge-discharge system 10 can be easily grasped.

The charge-discharge system 10 generates the display data 164m of a calendar screen on which the vehicle charge power amount information 164a and the first power amount information 164c are displayed as the charge-side power amount information 165, and the vehicle discharge power amount information 164b and the second power amount information 164d are displayed as the discharge-side power amount information 166. That is, when at least one of the power generation apparatus 70 and the energy storage apparatus 80 is connected to the charge-discharge system 10, the information indicating the magnitude of the charge power amount of the vehicle energy storage apparatus 51 and the information indicating the magnitude of at least one of the charge power amount of the energy storage apparatus 80 and the power consumption amount of the power load 20 are set as the charge-side power amount information 165. The information indicating the magnitude of the discharge power amount of the vehicle energy storage apparatus 51 and the information indicating the magnitude of at least one of the power generation amount of the power generation apparatus 70 and the discharge power amount of the energy storage apparatus 80 are set as the discharge-side power amount information 166. As a result, even when at least one of the power generation apparatus 70 and the energy storage apparatus 80 is connected to the charge-discharge system 10, the exchange of power (power amount) between the charge-discharge system 10 and at least one of the power generation apparatus 70 and the energy storage apparatus 80 can be displayed as a calendar on the screen of the display device 41. Therefore, the exchange of power in the charge-discharge system 10 can be easily grasped.

The charge-discharge system 10 generates the display data 164m for causing the display device 41 to display a calendar screen on which the first power amount information 164c is displayed near the vehicle charge power amount information 164a and the second power amount information 164d is displayed near the vehicle discharge power amount information 164b. When the vehicle charge power amount information 164a and the first power amount information 164c as the charge-side power amount information 165 are displayed close to each other, and the vehicle discharge power amount information 164b and the second power amount information 164d as the discharge-side power amount information 166 are displayed close to each other, it is easy to intuitively grasp the state of the power amount. Therefore, since the exchange of power (power amount) in the charge-discharge system 10 can be displayed together as a calendar on the screen of the display device 41 for each charge-side power amount information 165 and for each discharge-side power amount information 166, the exchange of power in the charge-discharge system 10 can be easily grasped.

The charge-discharge system 10 generates the display data 164m of a calendar screen on which diagrams indicating magnitudes of power amounts of the vehicle charge power amount information 164a and the first power amount information 164c are arranged, and diagrams indicating magnitudes of power amounts of the vehicle discharge power amount information 164b and the second power amount information 164d are arranged. That is, as the diagram indicating the magnitude of the power amount of the charge-side power amount information 165, a diagram indicating the magnitude of the charge power amount of the vehicle energy storage apparatus 51 and a diagram indicating the magnitude of at least one of the charge power amount of the energy storage apparatus 80 and the power consumption amount of the power load 20 are arranged. As the diagram indicating the magnitude of the power amount of the discharge-side power amount information 166, a diagram indicating the magnitude of the discharge power amount of the vehicle energy storage apparatus 51 and a diagram indicating the magnitude of at least one of the power generation amount of the power generation apparatus 70 and the discharge power amount of the energy storage apparatus 80 are arranged. As a result, it is easy to intuitively grasp and compare (which is excessive, balanced, etc.) the magnitude of the power amount of the charge-side power amount information 165 and the magnitude of the power amount of the discharge-side power amount information 166. Therefore, since the exchange of the power (power amount) in the charge-discharge system 10 can be displayed as a calendar on the screen of the display device 41 such that the magnitudes of the power amounts of the charge-side power amount information 165 and the discharge-side power amount information 166 can be easily understood and displayed, the exchange of the power in the charge-discharge system 10 can be easily grasped.

The charge-discharge system 10 generates, when not acquiring information indicating that the charge-side power amount display information 167 or the discharge-side power amount display information 168 has been selected, the display data 164m of a calendar screen on which the charge-side power amount information 165 or the discharge-side power amount information 166 is not displayed. As a result, information that has not been selected out of the charge-side power amount information 165 and the discharge-side power amount information 166 is not displayed on the calendar screen, so that information desired to be viewed can be selectively displayed, and the state of the power amount can be easily intuitively grasped. Therefore, since the exchange of power (power amount) in the charge-discharge system 10 can be limited to the target to be viewed and displayed as a calendar on the screen of the display device 41, the exchange of power in the charge-discharge system 10 can be easily grasped.

As described above, since the charge-discharge system 10 can cause the display device 41 to display a calendar screen that is not too difficult and not too simple, it is possible to easily grasp the exchange of power in the charge-discharge system 10 with the display device 41. By browsing such a calendar screen, it is possible to intuitively understand the features and tendencies of the date or the day of the week and improve the operation and the like of the vehicle 50 (business vehicle, commercial vehicle, or the like), so that the energy management can be optimized. Since it is possible to perform calendar display on the screen of the display device 41 only for a target to be viewed, it is possible to optimize energy management such as preparing for an increase in consumption of the power load 20 on Monday by increasing the charge amount of the energy storage apparatus 80 on the weekend.

For a public facility or a private facility considering introduction of the charge-discharge system 10, it is not preferable that power reception from the power system 60 increases with system operation. By grasping the exchange of power in the charge-discharge system 10 and efficiently receiving power from the power system 60, an increase in the electricity rate can be suppressed, and the introduction of the charge-discharge system 10 is promoted. It is also possible to contribute to enhancement of disaster prevention functions of public facilities, enhancement of BCP (business continuity plan during power failure) of private facilities, and the like.

Since it is possible to provide the charge-discharge system 10 capable of easily grasping the exchange of power, it contributes to the goal 7 "Ensure all people have access to inexpensive, reliable and sustainable modern energy" of the sustainable development goal (SDGs) led by the United Nations.

### [5 Description of modification example]

Although the charge-discharge system 10 and the like according to the present embodiment have been described above, the present invention is not limited to the above embodiment. The embodiment disclosed herein is illustrative in all respects and is not restrictive, and the scope of the present invention includes all modifications within the meaning and scope equivalent to the claims.

In the above embodiment, when the frame of the divided period (frame of date) is selected, the magnitude (numerical value) of the power amount indicated by the diagram displayed in the frame may be displayed in a list for each item (for each diagram). That is, when the acquisition unit 161 has acquired the information indicating that the frame has been selected, the generation unit 162 generates the display data 164m for causing the display device 41 to display a screen on which magnitudes (numerical values) of power amounts indicated by diagrams displayed in the frame are listed for each item. As a result, the transmission unit 163 transmits the display data 164m to the display device 41, and the display device 41 of the client device 40 displays a screen in which the magnitudes (numerical values) of the power amounts indicated by the diagrams displayed in the frame are listed for each item.

In the above embodiment, the second communication unit 230 may have the function of the first communication unit 160, or other devices in the charge-discharge system 10 or devices outside the charge-discharge system 10 (the server device 30, the client device 40, or the like) may have the function.

In the above embodiments, the display data 164m may be displayed not on the display device 41 of the client device 40 but on a display device of the server device 30 or a display device of a device (power conditioner 100 or charge-discharge device 200) in the charge-discharge system 10.

In the above embodiment, both the power generation apparatus 70 and the energy storage apparatus 80 are connected to the charge-discharge system 10, but it is sufficient that at least one of the power generation apparatus 70 and the energy storage apparatus 80 is connected. Alternatively, neither the power generation apparatus 70 nor the energy storage apparatus 80 may be connected to the charge-discharge system 10.

In the above embodiment, the power conditioner 100 and charge-discharge device 200 of the charge-discharge system 10 may be integrated. The function of the charge-discharge device 200 may be incorporated in the power conditioner 100, or the function of the power conditioner 100 may be incorporated in the charge-discharge device 200.

In the above embodiment, the first communication unit 160 includes the storage unit 164, but may not include the storage unit 164, and may store information in an external recording medium and acquire information from the recording medium.

In the above embodiment, the calendar screen displayed with the display data 164m is not a screen obtained by dividing one month into one days, but may be a screen obtained by dividing any period into any period. The calendar screen may be a screen in which one day is divided into one hours, a screen in which half a month is divided into half days, a screen in which one month is divided into one weeks, or a screen in which one year is divided into one months.

In the above embodiment, the charge-side power amount diagram 165a and the discharge-side power amount diagram 166a, and the diagrams included therein are rectangular bar graphs with the magnitude (numerical value) of the power amount as the height. However, the diagram may have any shape such as a triangle or a circle.

In the above embodiment, the numerical value of the power amount is displayed inside the diagrams included in the charge-side power amount diagram 165a and the discharge-side power amount diagram 166a, but the numerical value may be displayed outside the diagram and at a position adjacent to the diagram, or may be displayed at any other position.

In the above embodiment, the charge-side power amount diagram 165a and the numerical value of the power amount are displayed as the charge-side power amount information 165, but any one of the charge-side power amount diagram 165a and the numerical value of the power amount may not be displayed. As the charge-side power amount information 165, characters, symbols, or the like different from the charge-side power amount diagram 165a and the numerical value of the power amount may be displayed. The same applies to the discharge-side power amount information 166.

In the above embodiment, the charge-side power amount information 165 is disposed on the left side of the discharge-side power amount information 166. However, the charge-side power amount information 165 may be disposed at any position such as the right side, the upper side, or the lower side of the discharge-side power amount information 166. The charge-side power amount information 165 and the discharge-side power amount information 166 may not be displayed in the same positional relationship.

In the above embodiment, as the charge-side power amount information 165, the vehicle charge power amount diagram 164e and the first power amount diagram 164g (164g1 and 164g2) are displayed side by side (stacked) vertically, but may be displayed side by side. The vehicle charge power amount diagram 164e and the first power amount diagram 164g may be displayed close to each other without being arranged, or may be displayed at a relatively far position. The same applies to the discharge-side power amount information 166.

In the above embodiment, the order of various processing performed by the generation unit 162 may be changed. The processing of S202 to S208 in Fig. 7 may be arbitrarily interchanged. The processing of S302 and the processing of S304 in Fig. 8 may be interchanged. The processing of S402 to S406 and the processing of S408 to S412 in Fig. 9 may be interchanged.

The present invention can be realized not only as the charge-discharge system 10 and the method for controlling the charge-discharge system 10 but also as a program for causing a computer to execute processing included in the method for controlling the charge-discharge system 10. That is, each component included in the first communication unit 160 of the charge-discharge system 10 may be realized by a program execution unit such as a CPU or a processor reading and executing a software program recorded in a recording medium such as a hard disk or a semiconductor memory. The present invention can also be realized as a computer-readable non-transitory recording medium in which the program is recorded, for example, a flexible disk, a hard disk, a CD-ROM, an MO, a DVD, a DVD-ROM, a DVD-RAM, a BD (Blu-ray (registered trademark) Disc), or a semiconductor memory. The program can be distributed via the recording medium and a transmission medium such as the Internet. The present invention can also be realized as an integrated circuit including a processing unit included in the charge-discharge system 10. That is, each functional block of the first communication unit 160 of the charge-discharge system 10 illustrated in Fig. 4 may be realized as a large scale integration (LSI) which is an integrated circuit. These may be individually integrated into one chip, or may be integrated into one chip so as to include a part or all of them. As described above, in the first communication unit 160 of the charge-discharge system 10, each component may be configured by dedicated hardware, or may be realized by executing a software program suitable for each component.

A mode constructed by combining arbitrary components in the above embodiment and its modification examples is also included in the scope of the present invention.

### INDUSTRIAL APPLICABILITY

The present invention can be applied to a charge-discharge system or the like that performs charge-discharge with an energy storage apparatus included in a vehicle.

### DESCRIPTION OF REFERENCE SIGNS

1: supply area
10: charge-discharge system
20: power load
30: server device
40: client device
41: display device
41a: selection information
50: vehicle
51: vehicle energy storage apparatus
60: power system
70: power generation apparatus
80: energy storage apparatus
100: power conditioner
160: first communication unit
161: acquisition unit
162: generation unit
163: transmission unit
164: storage unit
164a: vehicle charge power amount information
164b: vehicle discharge power amount information
164c, 164c1, 164c2: first power amount information
164d, 164d1, 164d2: second power amount information
164e: vehicle charge power amount diagram
164f: vehicle discharge power amount diagram
164g, 164g1, 164g2: first power amount diagram
164h, 164h1, 164h2: second power amount diagram
164i: vehicle charge power amount display information
164j: vehicle discharge power amount display information
164k, 164k1, 164k2: first power amount display information
1641, 16411, 164l2: second power amount display information
164m: display data
165: charge-side power amount information
165a: charge-side power amount diagram
166: discharge-side power amount information
166a: discharge-side power amount diagram
167: charge-side power amount display information
168: discharge-side power amount display information
200: charge-discharge device
230: second communication unit

## Claims

1. A charge-discharge system that performs charge-discharge with a vehicle energy storage apparatus that is an energy storage apparatus of a vehicle in a predetermined supply area to which power from a power system is supplied, and supplies power to a power load in the supply area, the charge-discharge system comprising:
an acquisition unit that acquires charge-side power amount information indicating a magnitude of a power amount including a charge power amount from the charge-discharge system to the vehicle energy storage apparatus in predetermined periods, and discharge-side power amount information indicating a magnitude of a power amount including a discharge power amount from the vehicle energy storage apparatus to the charge-discharge system;
a generation unit that generates display data for causing a display device to display a calendar screen on which the charge-side power amount information and the discharge-side power amount information are displayed for each of the predetermined periods in a calendar in which the predetermined periods are arranged; and
a transmission unit that transmits the display data to the display device.

2. The charge-discharge system according to claim 1, wherein the generation unit generates the display data for causing the display device to display the calendar screen on which a charge-side power amount diagram that is a diagram indicating the magnitude of the power amount indicated by the charge-side power amount information is displayed as the charge-side power amount information, and a discharge-side power amount diagram that is a diagram indicating the magnitude of the power amount indicated by the discharge-side power amount information is displayed as the discharge-side power amount information.

3. The charge-discharge system according to claim 2, wherein the generation unit generates the display data for causing the display device to display the calendar screen on which a numerical value indicating the magnitude of the power amount indicated by the charge-side power amount information is further displayed at a position corresponding to the charge-side power amount diagram as the charge-side power amount information, and a numerical value indicating the magnitude of the power amount indicated by the discharge-side power amount information is further displayed at a position corresponding to the discharge-side power amount diagram as the discharge-side power amount information.

4. The charge-discharge system according to any one of claims 1 to 3, wherein the generation unit generates the display data for causing the display device to display the calendar screen displayed such that the charge-side power amount information and the discharge-side power amount information have the same positional relationship for each of the predetermined periods.

5. The charge-discharge system according to any one of claims 1 to 4, wherein
at least one of a power generation apparatus and an energy storage apparatus is connected to the charge-discharge system,
the acquisition unit
acquires, as the charge-side power amount information, vehicle charge power amount information indicating a magnitude of a charge power amount of the vehicle energy storage apparatus and first power amount information indicating a magnitude of a power amount of at least one of a charge power amount of the energy storage apparatus and a power consumption amount of the power load, and
acquires, as the discharge-side power amount information, vehicle discharge power amount information indicating a magnitude of a discharge power amount of the vehicle energy storage apparatus and second power amount information indicating a magnitude of a power amount of at least one of a generated power amount of the power generation apparatus and a discharge power amount of the energy storage apparatus, and
the generation unit generates the display data for causing the display device to display the calendar screen on which the vehicle charge power amount information and the first power amount information are displayed as the charge-side power amount information and the vehicle discharge power amount information and the second power amount information are displayed as the discharge-side power amount information.

6. The charge-discharge system according to claim 5, wherein the generation unit generates the display data for causing the display device to display the calendar screen in which the first power amount information is displayed closer to the vehicle charge power amount information than the vehicle discharge power amount information, and the second power amount information is displayed closer to the vehicle discharge power amount information than the vehicle charge power amount information.

7. The charge-discharge system according to claim 5 or 6, wherein the generation unit generates the display data for causing the display device to display the calendar screen on which a diagram indicating the magnitude of the power amount indicated by the vehicle charge power amount information and a diagram indicating the magnitude of the power amount indicated by the first power amount information are displayed side by side as the charge-side power amount information, and a diagram indicating the magnitude of the power amount indicated by the vehicle discharge power amount information and a diagram indicating the magnitude of the power amount indicated by the second power amount information are displayed side by side as the discharge-side power amount information.

8. The charge-discharge system according to any one of claims 1 to 7, wherein
the generation unit generates the display data for causing the display device to display the calendar screen on which charge-side power amount display information for displaying the charge-side power amount information and discharge-side power amount display information for displaying the discharge-side power amount information are further displayed,
the acquisition unit is configured to be capable of acquiring information indicating that at least one of the charge-side power amount display information and the discharge-side power amount display information displayed on the display device has been selected, and
the generation unit
generates the display data for causing the display device to display the calendar screen on which the charge-side power amount information is not displayed, when the acquisition unit does not acquire information indicating that the charge-side power amount display information has been selected, and
generates the display data for causing the display device to display the calendar screen on which the discharge-side power amount information is not displayed, when the acquisition unit does not acquire information indicating that the discharge-side power amount display information has been selected.

9. A method for controlling a charge-discharge system that performs charge-discharge with a vehicle energy storage apparatus that is an energy storage apparatus of a vehicle in a predetermined supply area to which power from a power system is supplied, and supplies power to a power load in the supply area, the method comprising:
acquiring charge-side power amount information indicating a magnitude of a power amount including a charge power amount from the charge-discharge system to the vehicle energy storage apparatus in predetermined periods, and discharge-side power amount information indicating a magnitude of a power amount including a discharge power amount from the vehicle energy storage apparatus to the charge-discharge system;
generating display data for causing a display device to display a calendar screen on which the charge-side power amount information and the discharge-side power amount information are displayed for each of the predetermined periods in a calendar in which the predetermined periods are arranged; and
transmitting the display data to the display device.

10. A program for causing a computer to execute processing included in the method for controlling a charge-discharge system according to claim 9.
